# EUROPÄISCHE PATENTSCHRIFT

(11) **EP 0 206 002 B1**
(45) Veröffentlichungstag und Bekanntmachung des Hinweises auf die Patenterteilung: **10.03.1993**
(21) Anmeldenummer: 86107455.7
(22) Anmeldetag: 02.06.1986
(51) Int. Cl.: F16K 15/20, B60C 29/02, B60C 29/00

(54) **Ventil für Fahrzeugreifen sowie Verfahren zu seiner Herstellung**
Valve for vehicle tyres and method for its manufacture
Soupape pour pneus de véhicule et sa méthode de fabrication

(30) Priorität: 03.06.1985 DE 3519883
(43) Veröffentlichungstag der Anmeldung: 30.12.1986
(73) Patentinhaber: Alligator Ventilfabrik GmbH, D-89527 Giengen (DE)
(72) Erfinder: Probst, Georg, Dipl.-Ing., D-7340 Geislingen/Steige (DE)
(74) Vertreter: Hiebsch, Gerhard F., Dipl.-Ing.

(56) Entgegenhaltungen:
- DE-A- 2 046 939
- FR-A- 1 432 885
- FR-A- 2 360 029
- US-A- 2 275 081
- US-A- 3 287 485

## Beschreibung

Die Erfindung betrifft ein Ventil für Fahrzeugreifen, wie es im Oberbegriff von Anspruch 1 definiert und aus der US-A 2 275 081 bekannt ist.

Zudem erfaßt die Erfindung ein Verfahren zum Herstellen eines Ventils für Fahrzeugreifen.

Das aus der US-A 2 275 081 bekannte Ventil für Fahrzeugreifen beschreibt eine sog. Ventilspindel für innere aufblasbare Fahrzeugschläuche, wie sie damals noch zusammen mit Manteln von Luftreifen für Kraftfahrzeuge verwendet wurden, also nicht für schlauchlose Reifen, wobei dann die dort beschriebene Ventilspindel am Innenschlauch des Luftreifens befestigt wurde.

Die "Ventilspindel" nach dieser US-A 2 275 081 ist ein mantelartiger Ventilkörper aus Naturgummi, mit einem Sockelabschnitt, der aus weicherem Material besteht und am Innenschlauch des Luftreifens befestigt ist, und einen Zylinderteil, der an seiner inneren Bohrungswandung aus härterem Material besteht. In der inneren Bohrungswandung sitzt ein herkömmliches Metallventil, das dort lösbar eingeschraubt ist. Für den harten Bereich dieses bekannten Ventilkörpers ist eine Mischung aus 25 Teilen Schwefel auf 100 Teile Gummi und für den weichen Bereich eine Mischung aus 5 bis 10 Teilen Schwefel auf 100 Teile Gummi vorgesehen.

Es sind auch noch neuere Ventile für schlauchlose Fahrzeugreifen bekannt, die als Gummiventile durch die DIN-Norm 7780 in Bemaßung sowie Form festgelegt sind. Sie erlauben durch die Elastizität ihres mantelartigen Körpers aus Gummi ein schnelles Einsetzen in eine Reifenfelge. Dieser mantelartige Körper hat eine birnenähnliche Kontur und umgibt den metallischen Ventilzylinder so, daß dieser außerhalb einer ringförmigen Abschlußkante des Gummikörpers mit seinem Außengewinde aufragt. Innerhalb des Metallzylinders verläuft jener Ventileinsatz, zwischen dem und der Innenfläche des Metallzylinders ein ringartiger Strömungsspalt verläuft. Der axiale Kraftspeicher wird von einer Schraubenfeder gebildet, die sich fußwärts gegen einen Teil des Metallzylinders abstützt - letzteres kann auch vom oberen Abschnitt des Metallzylinders getrennt angebracht sein.

Angesichts dieses Standes der Technik hat sich der Erfinder das Ziel gesetzt, die Konstruktion des Ventils -- und damit dessen Herstellung sowie die Betriebssicherheit -- zu verbessern und es zu vereinfachen.

Zur Lösung dieser Aufgabe führen die im Anspruch 1 angegebenen Merkmale.

Es wird also ein gegenüber dem Stande der Technik anderer Ventilaufbau vorgeschlagen, bei dem die üblichen Einzelteile vermindert sind, wobei das Ventil nunmehr - gegenüber dem aus der US-A 2 275 081 bekannten Stand der Technik - für schlauchlose Fahrzeugreifen einsetzbar ist. Auch ist demgegenüber sein Aufbau wesentlich einfacher.

Gegenüber den durch die DIN-Norm 7780 festgelegten Gummiventilen entfällt der metallische Ventilzylinder, statt dessen erhält der mantelartige Körper zur Längsachse des Ventiles hin Ausformungen, welche jenen Ventilzylinder ersetzen. Ein solcher Schritt jedoch wäre bei Beibehaltung der nach DIN 7780 vorgeschriebenen Fallhärte nicht funktionsfähig, weshalb erfindungsgemäß die Maßgabe anschließt, den vorgeschlagenen neuen Ventilkörper in unterschiedlichen Härten anzubieten; die Härte der an den Ventileinsatz anschließenden Flächen muß in jedem Falle höher sein als die Härte jener Teile, welche beispielsweise für den Klemmvorgang an der Felge erforderlich sind.

Es wäre aufwendig, wenn man den erfindungsgemäßen Ventilkörper aus mehreren Schichten unterschiedlicher Härte zusammensetzen würde. Statt dessen wird bevorzugt, einen stufenlosen Übergang zwischen den weicheren Bereichen und den härteren Bereichen zu schaffen, was durch ein erfindungsgemäßes Verfahren möglich wird. Dabei wird in eine Spritzform für den Ventilkörper zuerst ein weicher Kunststoff eingebracht, welcher den späteren Sockelbereich und die Außenflächen des Ventilkörpers bildet, anschließend wird härterer Kunststoff nachgespritzt, der sich an die Kernwand der Spritzform anschmiegt. Dank dieses erfindungsgemäßen Verfahrens entsteht der gewünschte stufenlose Übergang und eine innige Verbindung zwischen den Kunststoffen unterschiedlicher Härte.

Auch liegt es im Rahmen der Erfindung, daß der härtere Bereich einen zylindrischen Teil des Ventilkörpers mit dem Außengewinde umfaßt, also das Endstück des metallischen Ventilzylinders, welches aus dem mantelartigen Körper herausschaut und die Ventilkappe aufnimmt.

Als günstig hat es sich erwiesen, daß der Ventilkörper selbst zwischen einer oberen axialen Bohrung und einer unteren axialen Bohrung einen sich zuletzterer erweiternden Sitzkonus aufweist, welcher als Anschlag für den dank des Kraftspeichers bewegbaren Ventileinsatz dient.

Die untere Bohrung des Ventilkörpers geht in einen Sockelraum über, in welchem der Fuß des Kraftspeichers abgestützt ist und zwar bevorzgut an einem Lagerteil im Sockelraum, welches ohne weiteres in diesen eingeführt werden kann und dann zwischen einer ringartigen Pultfläche und einer Anschlagschulter festliegt.

Bevorzugt ist deshalb die den Sockelraum umgebende Zone des erfindungsgemäßen Ventilkörpers noch aus verhältnismäßig weichem Kunststoff oder liegt in dem Übergangsbereich zwischen diesem und dem härteren Kunststoff an den beschriebenen Bohrungsinnenwänden.

Insgesamt hat es sich erwiesen, daß ein Ventilkörper dieer Art die gewünschte Vereinfachung der Herstellung mit sich bringt und darüber hinaus eine hohe Betriebssicherheit anbietet.

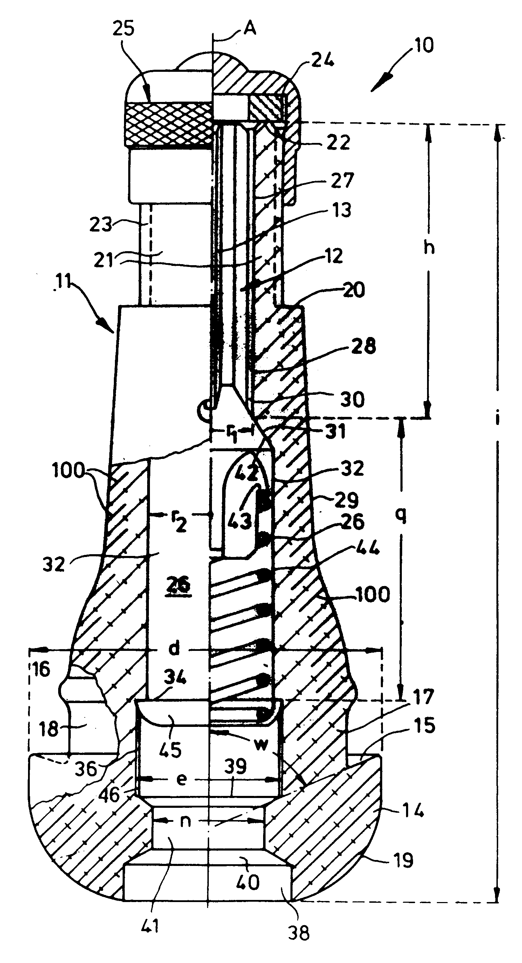

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in ihrer einzigen Figur einen Längsschnitt durch ein Ventil 10. Dieses weist in einem Ventilkörper 11 einer Länge i von beispielsweise 42,5 mm und eines maximalen Durchmessers d von 19,5 mm einen Ventileinsatz 12 mit axialer Ventilbohrung 13 auf.

Jener maximale Durchmesser d wird bestimmt von einem kalottenartigen Sockelabschnitt 14 des Ventilkörpers 11; dieser Sockelabschnitt 14 endet an einer schulterartigen Ringfläche 15, die sockelwärts in einem Winkel w von 65^{o} zur Ventillängsachse A geneigt ist und mit einem Wulst 16 eines anschließenden Zylinderabschnittes 17 eine Ringnut 18 zur Aufnahme der nicht dargestellten Kante eines Felgenloches begrenzt.

Oberhalb des Wulstes 16 verjüngt sich der Ventilkörper 11 bis zu einem zweiten schulterartigen Absatz 20, an den ein zylindrischer Kragen 21 mit sich von dem schulterartigen Absatz 20 bis zu einer Ringkante 22 erstreckendem Außengewinde 23 anschließt. Auf letzteres ist unter Zwischenschaltung eines der Ringkante 22 aufliegenden elastischen Ringes 24 eine Ventilkappe 25 aufgeschraubt.

Den beschriebenen Ventilkörper 11 durchsetzt in seiner gesamten Länge i eine axiale Ausnehmung, deren vom Kragen 21 umgebener oberer Teil zur Aufnahme des Ventileinsatzes 12 als zylindrische Bohrung oder Ausnehmung 28 mit einem Radius r₁ ausgebildet ist. Die Bohrungswandung oder Ausnehmungswandung 27 begrenzt mit dem Ventileinsatz 12 einen Ringspalt 30. An ihrem in der Zeichnung unteren Ende geht die Bohrung 28 mit dem Radius r₁ in einen sich sockelwärts erweiternden Sitzkonus (ventilsitz) 31 über, welcher an die Bohrungswandung 26 einer zylindrischen Bohrung oder Ausnehmung 32 des Radius r₂ anschließt. Die Länge h der oberen Bohrung 28 und die Länge q der unteren Bohrung 32 samt Sitzkonus 31 sind einander etwa gleich und messen mehr als ein Drittel der Ventilkörperlänge i.

Die untere Bohrung 32 endet im radialen Bereich des außenliegenden Wulstes 16 unter Bildung einer Anschlagschulter 34 an einem Sockelraum 36 des Durchmessers e. Zwischen diesem und einer von der Kalottenoberfläche 19 des Sockelabschnittes 14 ausgehenden Ausnehmung 38 befindet sich ein von Pultflächen 39,40 begrenzter enger Bohrungsabschnitt 41 des Durchmessers n.

Die einzelnen Teile des Ventileinsatzes 12 sind aus Gründen der Übersichtlichkeit nicht weiter dargestellt. Erkennbar ist aber, daß eine von der Ventillängsachse A weg geneigte Fläche 42 des Ventileinsatzes 12 dank der Kraft einer Axialfeder (Kraftspeicher) 44 jenem Sitzkonus 31 anliegt. Die Axialfeder 44 stützt sich einerseits an einer Schulter 43 des Ventileinsatzes 12 ab sowie anderseits in einer Stützrinne 45 eines Einsatzes 46, der seinerseits auf der oberen Pultfläche 39 ruht sowie zwischen dieser und der Anschlagschulter 34 festliegt.

Durch den Ringspalt 30 eingepreßte Luft drückt den Ventileinsatz 12 gegen die Kraft der Axialfeder 44 vom Sitzkonus 31 weg, dem sich bei Beendigung der Luftzuführung die Fläche 42 des Ventileinsatzes 12 erneut anschmiegt.

Von wesentlicher Bedeutung ist, daß der Ventilkörper 11 insgesamt aus Kunststoff besteht und zwar dergestalt, daß er im Kalottenbereich und an seiner bis zum Absatz 20 reichenden Außenfläche 29 von geringerer Härte ist als an den die Bohrungen 28, 31, 32 als axiale Ausnehmungen begrenzenden Innenflächen, beispielsweise an den Bohrungswandungen 26, 27 bzw. am Sitzkonus 31. Dies soll durch zusätzliche Schraffuren 100 im weicheren Bereich deutlich gemacht werden.

Die als Fallhärte bestimmte Härte des Werkstoffes im Auslieferungszustand liegt im weicheren Bereich 100 bei etwa 65 Shore A und nimmt zur Ventillängsachse A auf etwa 50 Shore D zu.

Bei der Herstellung eines derartigen Ventilkörpers 11 wird in eine dessen Konturen bestimmende Form der weichere Kunststoff an die Formaußenfläche geführt und anschließend ein härterer Kunststoff in Längsachsennähe eingebracht. So entsteht ein molekularer Verbund zwischen den beiden Bereichen, wobei es von untergeordneter Bedeutung bleibt, ob die Begrenzung der Fallhärtebereiche eine theoretische Trennfläche erzeugt oder der allmähliche Übergang nicht mehr deutlich festzustellen ist. In jedem Falle wird erreicht, daß der Ventilkörper 11 einerseits einstückig ist, jedoch zum anderen sowohl elastische Zonen -- beispielsweise im Bereich der Ringnut 18 -- aufweist als auch harte Oberflächen, wie dies insbesondere nahe des Ventileinsatzes 12 erforderlich ist.

## Patentansprüche

1. Ventil für Fahrzeugreifen mit einem mantelartigen Körper aus begrenzt elastischem Kunststoff definierter Härte, der einen Sockelabschnitt (14) als Anschlußorgan und einen Zylinderabschnitt mit Außengewinde (23) für eine Ventilkappe (25) aufweist, wobei eine axiale Ausnehmung (28, 32) des Körpers (11) in axialer Richtung unterschiedliche Durchmesser besitzt und einen Einsatz (12) aufnimmt, und der mantelartige Körper aus dem Kunststoff einstückig so hergestellt ist, daß die Härte in den Ausnehmungswandungen (26, 27) der axialen Ausnehmung (28, 32) in dem an dem Einsatz (12) anschließenden Bereich höher ist als am Sockelabschnitt (14),
dadurch gekennzeichnet
daß der Einsatz (12) mit dem Körper (11) das Ventil bildet und in diesem durch einen Kraftspeicher (44) gegen einen Ventilsitz (31) dieses Ventilkörpers (11) führbar angeordnet ist, daß an dessem freien Ende die axiale Ausnehmung (28) einen geringeren Durchmesser besitzt als in einem auf der anderen Seite des Ventilsitzes (31) vorgesehenen Abschnitt (32), wobei der weichere Bereich des Ventilkörpers (11) mit dem Sockelabschnitt (14) als Einschnappventil zur Verbindung mit einer Felge dient und eine Härte im Auslieferungszustand von etwa 65 bis 75 Shore A aufweist.

2. Ventil nach Anspruch 1, dadurch gekennzeichnet, daß der härtere Bereich im Auslieferungszustand etwa 50 Shore D aufweist.

3. Ventil nach Anspruch 1 oder 2, dadurch gekennzeichnet, daß der Übergang zwischen dem weichen und dem härteren Bereich des Ventilkörpers (11) stufenlos ist.

4. Ventil nach Anspruch 1,2 oder 3, dadurch gekennzeichnet, daß zumindest ein härterer Kunststoff mit zumindest einem weicheren Kunststoff im Ventilkörper (11) molekular verbunden ist und/oder daß der härtere Bereich den Zylinderabschnitt des Ventilkörpers (11) mit dem Außengewinde (23) umfaßt.

5. Ventil nach wenigstens einem der Ansprüche 1 bis 4, dadurch gekennzeichnet, daß der Ventilsitz des Ventilkörpers (11)zwischen der oberen Ausnehmung (28) und der unteren Ausnehmung (32) als sich zu letzterer erweiternder Sitzkonus (31) ausgebildet ist.

6. Ventil nach wenigstens einem der Ansprüche 1 bis 5, dadurch gekennzeichnet, daß die untere Ausnehmung (32) des Ventilkörpers (11) an einem Sockelraum (36) endet, in welchem der Fuß des Kraftspeichers (44) abgestützt ist.

7. Ventil nach wenigstens einem der Ansprüche 1 bis 6, dadurch gekennzeichnet, daß sich der Kraftspeicher (44) gegen ein Lagerteil (45, 46) im Sockelraum (36) abstützt und/oder der Sockelraum (36) eine ringartige Pultfläche (39) als Stützfläche für das Lagerteil (45, 46) des Kraftspeichers (44) aufnimmt.

8. Ventil nach wenigstens einem der Ansprüche 1 bis 7, dadurch gekennzeichent, daß der Sockelraum (36) gegenüber der Pultfläche (39) eine Anschlagschulter (34) für das Lagerteil (45) aufweist, wobei gegebenenfalls das Lagerteil (45) für den Kraftspeicher (44) eine ringförmige Rinne ist, welche klemmend im Sockelraum (36) des Ventilkörpers (11) gehalten ist.

9. Ventil nach wenigstens einem der Ansprüche 1 bis 8, dadurch gekennzeichnet, daß der Kunststoff des weicheren Bereiches eine Härte von etwa 65 Shore A im Auslieferungszustand aufweist.

10. Verfahren zur Herstellung eines Ventilkörpers nach wenigstens einem der Ansprüche 1 bis 9 durch Einspritzen von Kunststoff in eine Form, welche die äußeren und inneren Oberflächen des Ventilkörpers bestimmt, wobei in die Form zuerst ein Kunststoff einer Härte von etwa 65 Shore A so eingespritzt wird, daß dieser den Sockelbereich füllt sowie an der Außenwand der Form anliegt, und daß anschließend ein Kunststoff einer Härte von etwa 50 Shore D an die innere Formwand gespritzt wird und zudem den Kragenteil des Ventilkörpers füllt.

11. Verfahren nach Anspruch 10, dadurch gekennzeichnet, daß der härtere Kunststoff mit höherem Druck eingespritzt wird.

## Claims

1. Valve for vehicle tyres, comprising a casing-like body made of a limitedly flexible plastic with a specific hardness, having a base section (14) as a connecting element and a cylindrical section with an external thread (23) for a valve cap (25), an axial recess (28, 32) of the body (11) having different diameters in the axial direction and receiving an insert (12), and the casing-like body being formed in one piece from the plastic in such a manner that the hardness in the recess walls (26, 27) of the axial recess (28, 32) is higher in the region adjacent to the insert (12) than in the base section (14), characterised in that the insert (12) forms the valve together with the body (11) and can be moved against a valve seat (31) of this valve body (11) by an energy storage mechanism (44), and that at its free end the axial recess (28) has a smaller diameter than in a section (32) provided at the other side of the valve seat (31), the softer region of the valve body (11) serving together with the base section (14) as a snap-in valve for connection to a rim and having a Shore hardness number of approximately 65 to 75 A as delivered.

2. Valve according to claim 1, characterised in that the harder region has a Shore hardness number of approximately 50 D as delivered.

3. Valve according to claim 1 or claim 2, characterised in that the transition between the soft and the harder region of the valve body (11) is stepless.

4. Valve according to one of claims 1 to 3, characterised in that at least one harder plastic is combined molecularly with at least one softer plastic in the valve body (11) and/or that the harder region includes the cylindrical section of the valve body (11) with the external thread (23).

5. Valve according to at least one of claims 1 to 4, characterised in that between the upper recess (28) and the lower recess (32) the valve seat of the valve body (11) is designed as a conical seat (31) expanding towards the lower recess.

6. Valve according to at least one of claims 1 to 5, characterised in that the lower recess (32) of the valve body (11) ends at a base chamber (36) in which the foot of the energy storage mechanism (44) is supported.

7. Valve according to at least one of claims 1 to 6, characterised in that the energy storage mechanism (44) is supported against a bearing part (45, 46) in the base chamber (36) and/or the base chamber (36) receives an annular flat surface (39) as a supporting surface for the bearing part (45, 46) of the energy storage mechanism (44).

8. Valve according to at least one of claims 1 to 7, characterised in that the base chamber (36) has a stop shoulder (34) for the bearing part (45) with respect to the flat surface (39), the bearing part (45) for the energy storage mechanism (44) if necessary being an annular channel which is clamped into the base chamber (36) of the valve body (11).

9. Valve according to at least one of claims 1 to 8, characterised in that the plastic of the softer region has a Shore hardness number of approximately 65 A as delivered.

10. Method for the manufacture of a valve body according to at least one of claims 1 to 9 by injecting plastic into a mould which defines the outer and inner surfaces of the valve body, a plastic having a Shore hardness number of approximately 65 A first being injected into the mould in such a manner that it fills the base region and fits against the outer wall of the mould, and then a plastic having a Shore hardness number of approximately 50 D being injected on to the inner mould wall and in addition filling the collar part of the valve body.

11. Method according to claim 10, characterised in that the harder plastic is injected at a higher pressure.

## Revendications

1. Valve pour bandages pneumatiques de véhicules qui comporte un corps du type enveloppe réalisé en une matière plastique à élasticité limitée et dureté définie lequel présente une section formant socle (14) servant d organe obturateur et une section cylindrique munie d'un filetage extérieur (23) destiné à un capuchon (25), tandis qu'un évidement axial (28, 32) dudit corps (11) présente, en direction axiale, plusieurs diamètres différents et reçoit un insert (12), ledit corps du type enveloppe en matière plastique étant fabriqué en une seule pièce de telle sorte que sa dureté dans les parois (26, 27) de l'évidement axial (28, 32) est plus élevée dans la zone en contact avec l'insert que dans la section (14) formant socle, caractérisée en ce que l insert (12), associé au corps (11), constitue la valve et se trouve disposé à l'intérieur de ce dernier de manière à pouvoir y être guidé par un accumlulateur d'énergie (44) en s'opposant à un siège de valve (31) dudit corps de valve (11), en ce que l'évidement (28) présente un diamètre plus faible sur son extrémité libre que sur une section (32) prévue sur l'autre côté du siège de valve (31), tandis que la zone plus molle du corps (11), où se trouve la section (14) formant socle, sert de clapet à déclic permettant sa fixation sur une jante et présente, lors de sa livraison, une dureté d'environ 65 à 75 Shore A.

2. Valve selon la revendication 1, caractérisée en ce que, lors de la livraison, la zone la plus dure de la valve est d'une dureté d'environ 50 shore D.

3. Valve selon la revendication 1 ou 2, caractérisée en ce que la transition entre la zone la plus molle et la zone la plus dure du corps de la valve (11) est progressive.

4. Valve selon l'une des revendications 1 à 3, caractérisée en ce que, à l intérieur du corps de valve (11), il y a combinaison moléculaire entre une matière plastique plus dure avec au moins une matière plastique plus molle et/ou en ce que la zone la plus dure comprend la section cylindrique dudit corps de valve (11) munie du filetage extérieur (23).

5. Valve selon au moins l une des revendications 1 à 4, caractérisé en ce que le siège du corps de valve (11) est réalisé en forme de cône (32) placé entre l'encoche supérieure (28) et l'encoche inférieure (32) et allant en s évasant en direction de cette dernière encoche.

6. Valve selon au moins l'une des revendications 1 à 5, caractérisée en ce que l'encoche inférieure (32) du corps de valve (11) se termine sur un espace formant socle (36) à l'intérieur duquel vient s'appuyer le pied de l'accumulateur d'énergie (44).

7. Valve selon au moins l'une des revendications 1 à 6, caractérisé en ce que l'accumulateur d'énergie (44) s'appuie contre un coussinet (45, 46) situé à l'intérieur de l'espace formant socle (36) et/ou en ce que ledit espace formant socle (36) reçoit une face du type collier formant pupitre (39) et servant de face d'appui pour le coussinet (45, 46) de l'accumulateur d'énergie (44).

8. Valve selon au moins l'une des revendications 1 à 7, caractérisée en ce que l'espace formant socle (36) présente, par rapport à la face d'appui (39) un épaulement de butée (44) pour le coussinet (45), ledit coussinet (45) étant éventuellement une gorge de forme annulaire destinée à l'accumulateur d'énergie (44) laquelle est maintenue par blocage à l'intérieur de l'espace formant socle (36) du corps de valve (11).

9. Valve selon au moins l'une des revendications 1 à 8, caractérisée en ce que la matière plastique de la zone la plus molle présente, lors de la livraison, une dureté d'environ 65 shore A.

10. Procédé pour la fabrication d'un corps de valve selon au moins l une des revendications 1 à 9, par injection d'une matière plastique dans un moule qui définit les surfaces extérieure et intérieure dudit corps de valve, une matière plastique d'une dureté d'environ 65 shore A étant injectée tout d abord dans le moule de manière à remplir la zone formant socle et venant s appliquer sur la paroi extérieure du moule, une matière plastique d'une dureté d'environ 50 shore D étant ensuite injectée sur la paroi intérieure du moule tout en remplissant la partie du corps de valve formant collet.

11. Procédé selon la revendication 10, caractérisé en ce que la matière plastique la plus dure est injectée sous une pression plus élevée.
